# EUROPÄISCHE PATENTSCHRIFT

(11) **EP 0 767 952 B1**
(45) Veröffentlichungstag und Bekanntmachung des Hinweises auf die Patenterteilung: **04.07.2001**
(21) Anmeldenummer: 96911909.8
(22) Anmeldetag: 24.04.1996
(51) Int. Cl.: G11B 7/00, G02B 26/10

(54) **LICHTSTRAHL-ABLENKVORRICHTUNG**
LIGHT BEAM DEFLECTING DEVICE
SYSTEME DE DEVIATION D'UN FAISCEAU LUMINEUX

(30) Priorität: 29.04.1995 DE 19515887
(43) Veröffentlichungstag der Anmeldung: 16.04.1997
(73) Patentinhaber: Heidelberger Druckmaschinen Aktiengesellschaft, 69115 Heidelberg (DE)
(72) Erfinder: JACOBSEN, Thomas, D-24111 Kiel (DE); LEMKE, Bernd-Joachim, D-23795 Bad Segeberg (DE)
(86) Internationale Anmeldenummer: DE9600708
(87) Internationale Veröffentlichungsnummer: WO9635211

(56) Entgegenhaltungen:
- EP-A- 0 450 901
- EP-A- 0 475 399
- EP-A- 0 514 065

## Beschreibung

Die Erfindung bezieht sich auf das Gebiet der elektronischen Reproduktionstechnik und betrifft eine Lichtstrahl-Ablenkvorrichtung in einer Abtasteinrichtung für Vorlagen-Abtastgeräte oder für Aufzeichnungsgeräte. Eine solche Abtasteinrichtung weist im wesentlichen eine Lichtquelle auf, beispielsweise eine Laserlichtquelle, die einen Lichtstrahl erzeugt, der mittels der rotierenden Lichtstrahl-Ablenkvorrichtung periodisch über ein Objekt abgelenkt wird.

Bei einem Vorlagen-Abtastgerät, auch Eingabe-Scanner genannt, wird ein in einer Abtasteinrichtung erzeugter Lichtstrahl pixel- und zeilenweise über eine abzutastende Vorlage geführt, und das von der Vorlage reflektierte oder durchgelassene Abtastlicht in einem optoelektronischen Wandler in ein Bildsignal umgewandelt. Bei einem Aufzeichnungsgerät, auch Recorder, Belichter oder Ausgabe-Scanner genannt, wird der in einer Abtasteinrichtung gewonnene Lichtstrahl zur Aufzeichnung von Informationen durch ein Bildsignal intensitätsmoduliert und pixel- und zeilenweise über ein lichtempfindliches Aufzeichnungsmaterial geführt.

Im Falle eines Flachbett-Gerätes ist die Halterung für die Vorlage bzw. das Aufzeichnungsmaterial eine ebene Fläche, über die der Lichtstrahl pixel- und zeilenweise geführt wird, und die sich relativ zur Abtasteinrichtung bewegt. Im Falle eines Innentrommel-Gerätes ist die Halterung für die Vorlage bzw. für das Aufzeichnungsmaterial als stationäre Halbschale oder Mulde ausgebildet. Die Abtasteinrichtung bewegt sich parallel zur Längsachse der Halterung, und der Lichtstrahl wird senkrecht zur Längsachse radial über die Vorlage bzw. das Aufzeichnungsmaterial geführt.

Ein Innentrommel-Aufzeichnungsgerät ist beispielsweise aus der EP-A-0 354 028 bekannt. Die Lichtstrahl-Ablenkvorrichtung ist dort als eine quer zur Lichtausbreitungsrichtung angeordnete spiegelnde Fläche ausgebildet, die mit einer rotierenden Welle verbunden ist. Mit Hilfe der spiegelnden Fläche wird der Lichtstrahl auf ein Aufzeichnungsmaterial geleitet.

Während des Betriebes des Aufzeichnungsgerätes können sich Verunreinigungen an der spiegelnden Fläche ansammeln und es können aufgrund der bezüglich der Rotationsachse unsymmetrischen Gestaltung bei hohen Drehzahlen Luftturbulenzen entstehen. Diese Luftturbulenzen führen zu Geräuschbelästigungen, verursachen zusätzliche Verschmutzungen im Bereich der Reflexionsfläche und beeinträchtigen die gleichmäßige Rotation der spiegelnden Fläche.

Aus der DE-A-41 24 229 ist bereits eine Lichtstrahl-Ablenkvorrichtung mit einer Lichteintrittsfläche und einer Lichtaustrittsfläche für den senkrecht abgelenkten Lichtstrahl bekannt, die aus einem rotationsfähig gelagerten Trägerprisma und aus einem sich in Richtung einer Rotationsachse erstreckenden, lichtdurchläßigen Ablenkprisma besteht. Die an das Trägerprisma angrenzende Fläche des Ablenkprismas ist als Reflexionsfläche ausgebildet, die quer zur Rotationsachse verläuft. Das Ablenkprisma ist mit dem Trägerprisma verklebt, und beide Prismen ergänzen sich mindestens bereichsweise zu einer bezüglich der Rotationsachse symmetrischen Einheit. Seitlich der Einheit sind scheibenförmige Abdeckungselemente angeordnet, welche die Einheit in der radialen Ausdehnung überkragen.

Bei dieser Lichtstrahl-Ablenkvorrichtung treten durch die Abdeckungselemente zwar nur geringe Luftturbulenzen, Verschmutzungen sowie Laufunruhe auf, die Herstellung ist aber vergleichsweise aufwendig, da die Abdeckungselemente genau gefertigt und an der Einheit präzise zentriert werden müssen.

Aus der DE-A-41 30 977 ist eine weitere Lichtstrahl-Ablenkvorrichtung bekannt, die aus einem als Kugelsegment ausgebildeten, transparenten Körper, welcher eine Lichteintrittsfläche, eine Reflexionsfläche und eine Lichtaustrittsfläche aufweist und aus einem ebenfalls als Kugelsegment ausgebildeten Trägerkörper besteht, der an der Reflexionsschicht mit dem transparenten Körper verklebt ist. Die aus dem transparenten Körper und dem Trägerkörper gebildete Einheit ist um eine zur Lichteintrittsfläche senkrecht stehende Achse drehbar und weist eine zumindest in Bezug auf die Achse rotationssymmetrische Außenkontur auf. Durch die kugelförmige Ausbildung der Lichtstrahl-Ablenkvorrichtung kann diese mit einer relativ hohen Drehzahl rotieren, ohne daß wesentliche Luftturbulenzen und Laufgeräusche entstehen.

Aus der EP-A-0 475 399 nach der Anspruch 1 abgegrengt ist, ist eine weitere Lichtstrahl-Ablenkvorrichtung für einen Innentrommel-Belichter bekannt, bei der der Reflektor von einer zylinderförmigen Hülse umgeben ist, welche an der Stirnseite eine Lichteintrittsöffnung für einen einfallenden Lichtstrahl und an der Mantelfläche eine Lichtaustrittsfläche für den an dem Reflektor abgelenkten Lichtstrahl aufweist. Bei dieser Lichtstrahl-Ablenkvorrichtung ist der Reflektor bereits durch eine Hülse geschützt, dennoch können Staubpartikel durch die Lichteintrittsfläche oder die Lichtaustrittsfläche in das Innere gelangen und den Reflektor verschmutzen.

Zur Belichtung bestimmter Aufzeichnungsmaterialien werden Lichtquellen, vorzugsweise Laserlichtquellen, mit höheren Lichtleistungen benötigt. Die benötigten Lichtleistungen können in der Praxis zur Zeit nur von Lichtquellen erzeugt werden, die Licht mit größerer Wellenlänge von beispielsweise 1064 nm erzeugen. Um einen Lichtstrahl größerer Wellenlänge abzulenken muß die Lichtstrahl-Ablenkvorrichtung eine entsprechend große Eintrittsapertur aufweisen, um trotz der größeren Wellenlänge des Lichtstrahls vergleichbare Pixelgrößen und Linienbreiten bei der Belichtung zu erhalten.

Die Vergrößerung der Eintrittsapertur bei einer Lichtstrahl-Ablenkvorrichtung hat jedoch eine Erhöhung der Laufgeräusche und der Laufunruhe zur Folge. Ein weiterer Nachteil besteht darin, daß die Luftturbulenzen die Spielgelflächen der Lichtstrahl-Ablenkvorrichtung verschmutzen, was zu optischen Verlusten und damit zu einer schlechteren Reproduktionsqualität führt.

Aufgabe der vorliegenden Erfindung ist es daher, eine fokussierende Lichtstrahl-Ablenkvorrichtung derart auszubilden, daß sie eine große Eintrittsapertur für den einfallenden Lichtstrahl aufweist, um einen austretenden Lichtstrahl mit kleiner Punktgröße zu erzeugen und daß dennoch Luftturbulenzen und Laufunruhe vermindert sowie Verschmutzungen der Spiegelflächen verhindert werden.

Diese Aufgabe wird durch die Merkmale des Anspruchs 1 gelöst.

Vorteilhafte Weiterbildungen und Ausgestaltungen sind in den Unteransprüchen angegeben.

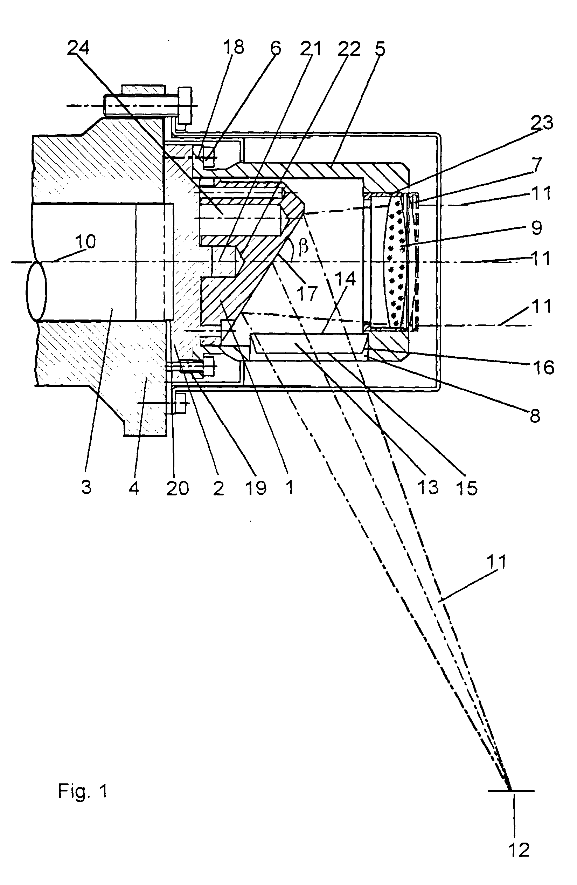

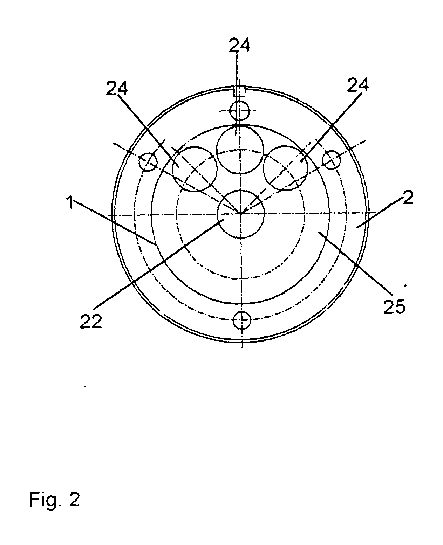

Die Erfindung wird nachfolgend anhand der Fig. 1 und 2 näher erläutert.

Es zeigen:
Fig. 1 einen Längsschnitt durch die Lichtablenk-Vorrichtung und
Fig. 2 eine Aufsicht auf den Reflektor.

Fig. 1 zeigt einen Längsschnitt durch die erfindungsgemäße Lichtstrahlablenk-Vorrichtung. Ein Reflektor (1) ist mit einem Träger (2) verbunden, der an eine rotationsfähig gelagerte Welle (3) gekoppelt ist. Die Welle (3) wird in einer Halterung (4) geführt. Der Reflektor (1) ist innerhalb eines als rotationssymmetrische Hülse (5) ausgebildeten Gehäuses angeordnet, die mit dem Träger (2) verbunden ist. Die Verbindung kann über Schrauben (6) erfolgen. Die hohlzylinderförmige Hülse (5) weist an der dem Reflektor (1) abgewandten Stirnseite eine Lichteintrittsöffnung (7) und in der Mantelfläche eine Lichtaustrittsöffnung (8) auf.

In der Lichteintrittsöffnung (7) befindet sich mindestens eine Linse, vorzugsweise ein Achromat (9), der symmetrisch zu einer optischen Achse (10) angeordnet ist. Die optische Achse (10) bildet gleichzeitig die Rotationsachse für die Lichtstrahl-Ablenkvorrichtung.

Der Achromat (9) ist in Richtung der optischen Achse (10) zwecks Justierung verschiebbar und kann nach der Justierung in der endgültigen Position in der Hülse (5), beispielsweise durch Klebung, fixiert werden. Die Justierung erfolgt derart, daß ein reflektierter Lichtstrahl (11) auf eine Objektebene (12) fokussiert wird.

Die Lichtaustrittsöffnung (8) ist von einem transparenten Einsatz (13) verschlossen, der eine plane innere Lichtdurchtrittsfläche (14) und eine plane äußere Lichtdurchtrittsfläche (15) aufweist. Die Lichtdurchtrittsflächen (14; 15) sind in bevorzugter Weise keilförmig zueinander ausgerichtet, wobei die äußere Lichtdurchtrittsfläche (15) parallel zu der optischen Achse (10) bzw. parallel zur Mantellinie der Hülse (5) orientiert ist. Der Winkel zwischen den keilförmig zueinander ausgerichteten Lichtdurchtrittsflächen (14; 15) kann in Abhängigkeit von dem jeweiligen Reflexionswinkel des Lichtstrahls (11) variieren. Der keilförmige, transparente Einsatz (13) ist in die Lichtaustrittsöffnung (8) eingeklebt. Mittels des keilförmigen Einsatzes (13) kann in vorteilhafter Weise eine Astigmatismus-Korrektur durchgeführt werden.

Zur Erhöhung der Stabilität der Vorrichtung sowie zur bestmöglichen Annäherung des Einsatzes (13) an die Außenkontur der Hülse (5) weist die außenseitige Begrenzung des Einsatzes (13) in bevorzugter Weise schräge Flanken (16) auf, so daß die Querschnittsfläche des Einsatzes (12) in beiden Ausdehnungen im wesentlichen trapezförmig ausgebildet ist.

Der Reflektor (1) weist eine schräg zur optischen Achse (10) orientierte Reflexionsfläche (17) oder Spiegelfläche auf. Der Reflektor (1) besteht beispielsweise aus poliertem Aluminium, und die Reflexionsfläche (17) weist beispielsweise eine Goldbeschichtung auf. Der Neigungswinkel (β) der Reflexionsfläche (17) relativ zur optischen Achse (10) kann beispielsweise im Bereich von 45° bis 70° liegen. In dem dargestellten Ausführungsbeispiel beträgt der Neigungswinkel (β) beispielsweise 65°. Eine widerstandsfähige Ausführungsform des Reflektors (1) wird dadurch erzielt, daß der Reflektor (1) eine im wesentlichen zylindrische Grundform aufweist, und die Reflexionsfläche (17) als schräg angeordneter Zylinderschnitt ausgebildet ist.

Der in einer nicht dargestellten, stationären Lichtquelle erzeugte Lichtstrahl (11) fällt durch die Lichteintrittsöffnung (7) und den Achromaten (9) auf die Reflexionsfläche (17) des Reflektors (1). Der von der Reflxionsfläche (17) abgelenkte Lichtstrahl (11) gelangt durch die Lichtaustrittsöffnung (8) auf die Objektebene (12), auf der, im Fall, daß die Lichtstrahl-Ablenkvorrichtung in einem Belichter verwendet wird, ein zu belichtendes Aufzeichnungsmaterial fixiert ist.

Durch die Anordnung des Reflektors (1) in einem hülsenförmigen Gehäuse entsteht in vorteilhafter Weise eine kompakte Lichtstrahl-Ablenkvorrichtung, die eine im wesentlichen rotationssymmetrische Außenkontur aufweist. Dadurch, daß die Lichteintrittsöffnung (7) durch den Achromaten (9) und die Lichtaustrittsöffnung (8) durch den transparenten Einsatz (13) verschlossen sind, entsteht in bevorzugter Weise ein gekapselter Innenraum, der eine Verschmutzung der Reflexionsfläche (17) des Reflektors (1) verhindert.

Die Hülse (5) ist mit einem umlaufenden Flansch (18) versehen, in dem Bohrungen (19) zur Hindurchführung der Schrauben (6) angeordnet sind. Die Schrauben (6) greifen mit Außengewinden in Innengewinde des Trägers (2) ein. Der Träger (2) nimmt in einer Ausnehmung (20) ein Endstück der Welle (3) auf. Zur Zentrierung des Reflektors (1) weist der Träger (2) einen Zentrierzapfen (21) auf, der in eine Zentrierbohrung (22) des Reflektors (1) eingeführt ist, Die Zentrierbohrung (22) und der Zentrierzapfen (21) erstrecken sich symmetrisch zur optischen Achse (10). Der Achromat (9) ist von einem Einsatz (23) gehaltert, der relativ zur Hülse (5) in Richtung der optischen Achse (10) zwecks Fokussierung des Lichtstrahles (11) verschieblich ist.

Der Reflektor (1) weist Gewichtsausgleichsbohrungen (24) auf, um eine zur optischen Achse (10) symmetrische Materialverteilung und gleichzeitig eine Gewichtsreduzierung zu erreichen. Die Gewichtsausgleichsbohrungen (24) erstrecken sich von dem Träger (2) des Reflektors (1) in Richtung auf die Reflexionsfläche (17), ohne diese jedoch zu durchdringen.

Eine Auswuchtung bei gleichzeitiger hoher mechanischer Stabilität kann dadurch erreicht werden, daß drei Gewichtsausgleichsbohrungen (24) vorgesehen sind. Eine effektive Anordnung der Gewichtsausgleichsbohrungen (24) wird dadurch hergestellt, daß sie sich entlang des äußeren Umfanges des Reflektors (1) erstrecken. Durch benachbart angeordnete Gewichtsausgleichsbohrungen (24) wird eine raumsparende Anordnung erreicht.

Durch die Verwendung der erfindungsgemäßen Lichtstrahl-Ablenkvorrichtung ist es möglich, entsprechend der größeren Wellenlänge eine vergrößerte Eintrittsapertur einzusetzen und trotz der größeren Wellenlänge vergleichbare Linienbreiten und Pixel- bzw. Punktgrößen zu erzeugen. Grundsätzlich kann die Lichtstrahl-Ablenkvorrichtung auch zur Ablenkung von Lichtstrahlen geringerer Wellenlängen verwendet werden, wobei gegenüber dem Stand der Technik ebenfalls eine Verbesserung der Laufruhe und eine Reduzierung der Verschmutzungsneigung erreicht werden. Die Lichtstrahl-Ablenkvorrichtung hat darüberhinaus den Vorteil, daß sie modular aufgebaut ist, wodurch jedes Baumodul einzeln bezüglich der Rotationsachse ausgewuchtet und damit die Fertigung vereinfacht werden kann.

Fig. 2 zeigt in einer Aufsicht auf den Reflektor (1) die Lage der Gewichtsausgleichsbohrungen (24) relativ zur Zentrierbohrung (22). Es sind drei Gewichtsausgleichsbohrungen (24) vorgesehen, die sich auf einem Kreis um die Zentrierbohrung (22) erstrecken. Verbindungslinien des Mittelpunktes der Zentrierbohrung (22) mit den Mittelpunkten der außenliegenden Gewichtsausgleichsbohrungen (24) spannen einen Winkel von 90° auf. Die Positionierung der Gewichtsausgleichsbohrungen (24) ist derart gewählt, daß sowohl eine hohe Stabilität als auch eine symmetrische Gewichtsverteilung bezüglich der optischen Achse (10) als Rotationsachse erreicht werden. Der Reflektor (1) ist auf dem Träger (2) montiert, über den sich ein Zylinderanschnitt (25) mit der nicht sichtbaren Reflexionsfläche (17) erhebt.

## Patentansprüche

1. Vorrichtung zur Ablenkung eines Lichtstrahles, bestehend aus
- einem um eine optische Achse (10) drehbar gelagerten Träger (2),
- einem an dem rotierenden Träger (2) angeordneten Reflektor (1) mit einer quer zur optischen Achse (10) orientierten Reflexionsfläche (17) und
- einer mit dem rotierenden Träger (2) verbundenen und den Reflektor (1) umschließenden Hülse (5), welche an einer von dem Reflektor (1) abgewandten Stirnfläche eine Lichteintrittsöffnung (7) für einen einfallenden Lichtstrahl (11) und in der Mantelfläche eine Lichtaustrittsöffnung (8) für den abgelenkten Lichtstrahl (11) aufweist, **dadurch gekennzeichnet,** daß
- in der Lichteintrittsöffnung (7) mindestens eine von der Hülse (5) gehalterte Linse (9) zur Fokussierung des einfallenden Lichtstrahls (11) angeordnet ist und
- in der Lichtaustrittsöffnung (8) ein transparenter Einsatz (13) angeordnet ist.

2. Vorrichtung nach Anspruch 1, **dadurch gekennzeichnet,** daß die Linse (9) als Achromat ausgebildet ist.

3. Vorrichtung nach Anspruch 1 oder 2, **dadurch gekennzeichnet,** daß der Reflektor (1) eine im wesentlichen zylindrische Grundform aufweist, und die Reflexionsfläche (17) als schräg angeordneter Zylinderschnitt ausgebildet ist.

4. Vorrichtung nach einem der Ansprüche 1 bis 3, **dadurch gekennzeichnet,** daß der Reflektor (1) im Bereich einer der Reflexionsfläche (17) abgewandten Rückseite mindestens eine Gewichtsausgleichsbohrung (24) aufweist.

5. Vorrichtung nach 4, **dadurch gekennzeichnet,** daß drei Gewichtsausgleichsbohrungen (24) vorgesehen sind.

6. Vorrichtung nach Anspruch 4 oder 5, **dadurch gekennzeichnet,** daß sich die Gewichtsausgleichsbohrungen (24) entlang eines äußeren Umfanges des Reflektors (1) erstrecken.

7. Vorrichtung nach einem der Ansprüche 3 bis 6, **dadurch gekennzeichnet,** daß die Gewichtsausgleichsbohrungen (24) einander benachbart angeordnet sind.

8. Vorrichtung nach einem der Ansprüche 1 bis 7, **dadurch gekennzeichnet,** daß die Linse (9) in einem Einsatz (23) gehaltert ist, der innerhalb der Hülse (5) in Richtung der optischen Achse (10) verschiebbar ist.

9. Vorrichtung nach einem der Ansprüche 1 bis 8, **dadurch gekennzeichnet,** daß die Reflexionsfläche (17) des Reflektors (1) in einem Winkelbereich von 45° bis 70° geneigt zur optischen Achse (10) angeordnet ist.

10. Vorrichtung nach einem der Ansprüche 1 bis 9, **dadurch gekennzeichnet,** daß
- der transparente Einsatz (13) eine in den Innenraum der Hülse (5) gerichtete plane innere Lichtdurchtrittsfläche (14) und eine vom Innenraum abgewandte plane äußere Lichtdurchtrittsfläche (15) aufweist,
- die Lichtdurchtrittsflächen (14; 15) keilförmig zueinander ausgerichtet sind, und
- die äußere Lichtdurchtrittsfläche (15) parallel zur optischen Achse (10) bzw. zur Mantellinie der Hülse (5) ausgerichtet ist.

11. Vorrichtung nach Anspruch 10, **dadurch gekennzeichnet,** daß der Keilwinkel in Abhängigkeit von dem Reflexionswinkel des Lichtstrahles (11) gewählt ist.

12. Vorrichtung nach einem der Ansprüche 1 bis11, **dadurch gekennzeichnet,** daß die Außenbegrenzungen der Querschnittsfläche des transparenten Einsatzes (13) schräge Flanken (16) aufweisen.

13. Vorrichtung nach einem der Ansprüche 1 bis 12, **dadurch gekennzeichnet,** daß die Querschnittsfläche des transparenten Einsatzes (13) in beiden Ausdehnungen im wesentlichen trapezförmig ausgebildet ist.

14. Vorrichtung nach einem der Ansprüche 1 bis 13, **dadurch gekennzeichnet,** daß der Reflektor (1) im wesentlichen aus Aluminium besteht und die Reflexionsfläche (17) eine Goldbeschichtung aufweist.

15. Vorrichtung nach einem der Ansprüche 1 bis 14, **dadurch gekennzeichnet,** daß der Reflektor (1) mit dem Träger (2) verklebt ist.

16. Vorrichtung nach einem der Ansprüche 1 bis 15, **dadurch gekennzeichnet,** daß der Einsatz (23) bzw. der Linse (9) in radialer Richtung mit der Hülse (5) verklebt ist.

## Claims

1. Device for deflecting a ray of light, consisting of
- a carrier (2) borne rotatably about an optical axis,
- a reflector (1), mounted on the rotating carrier (2), with a reflecting face (17) orientated obliquely to the optical axis (10) and
- a sleeve (5), connected to the rotating carrier (2), surrounding the reflector (1) and having a light entry orifice (7) for an incoming light ray (11) on an end face remote from the reflector (1) and a light exit orifice (8) for the deflected light ray (11) in the exterior face, characterised in that,
- at least one lens (9), held by the sleeve (5), for focusing the incoming light ray (11) is arranged in the light entry orifice (7) and
- a transparent insert (13) is arranged in the light exit orifice (8).

2. Device according to Claim 1, characterised in that the lens (9) is constructed as an achromatic lens.

3. Device according to Claim 1 or 2, characterised in that the reflector (1) has a substantially cylindrical basic shape and the reflecting face (17) is constructed as an obliquely arranged cylindrical section.

4. Device according to one of Claims 1 to 3, characterised in that the reflector (1) has at least one weight-compensating bore (24) in the region of a rear side facing away from the reflecting face (17).

5. Device according to Claim 4, characterised in that three weight-compensating bores (24) are provided.

6. Device according to Claim 4 or 5, characterised in that the weight-compensating bores (24) extend along an outer perimeter of the reflector (1).

7. Device according to one of Claims 3 to 6, characterised in that the weight compensating bores (24) are arranged adjacent to one another.

8. Device according to one of Claims 1 to 7, characterised in that the lens (9) is held in an insert (23) which is displaceable inside the sleeve (5). in the direction of the optical axis (10).

9. Device according to one of Claims 1 to 8, characterised in that the reflecting face (17) of the reflector (1) is arranged inclined to the optical axis (10) in an angle range of 45° to 70°.

10. Device according to one of Claims 1 to 9, characterised in that
- the transparent insert (13) has a flat inner light transmission face (14) directed into the inside of the sleeve (5) and a flat outer light transmission face (15) facing away from the inside,
- the light transmission faces (14; 15) are orientated in a wedge shape towards one another and
- the outer light transmission face (15) is orientated parallel to the optical axis (10) or to the generatrix of the sleeve (5).

11. Device according to Claim 10, characterised in that the wedge angle is chosen as a function of the angle of reflection of the light ray (11).

12. Device according to one of Claims 1 to 11, characterised in that the outer delimitations of the cross-sectional face of the transparent insert (13) have oblique sides (16).

13. Device according to one of Claims 1 to 12, characterised in that the cross-sectional face of the transparent insert (13) in both extensions is substantially trapezoidal in shape.

14. Device according to one of Claims 1 to 13, characterised in that the reflector (1) substantially consists of aluminium and the reflecting face (17) has a gold coating.

15. Device according to one of Claims 1 to 14, characterised in that the reflector (1) is glued to the carrier (2).

16. Device according to one of Claims 1 to 15, characterised in that the insert (23) or the lens (9) is glued to the sleeve (5) in a radial direction.

## Revendications

1. Dispositif pour dévier un faisceau lumineux, comprenant :
- un support (2) monté à rotation autour d'un axe optique (10),
- un réflecteur (1) porté par le support rotatif (2) et ayant une surface de réflexion (17) orientée transversalement à l'axe optique (10), et
- un manchon (5) entourant le réflecteur (1) et relié au support rotatif (2), ce manchon ayant, au niveau d'une surface frontale non tournée vers le réflecteur (1), une ouverture d'entrée de lumière (7) pour un faisceau lumineux incident (11), et un orifice de sortie de lumière (8) dans la surface du manchon, pour le faisceau lumineux (11) dévié,
caractérisé en ce que
- l'ouverture d'entrée (7) du faisceau lumineux comporte au moins une lentille (9) tenue par le manchon (5), pour focaliser le faisceau lumineux incident (11), et
- l'ouverture de sortie de lumière (8) comporte une garniture transparente (13).

2. Dispositif selon la revendication 1,
caractérisé en ce que
la lentille (9) est achromatique.

3. Dispositif selon l'une quelconque des revendications 1 ou 2,
caractérisé en ce que
le réflecteur (1) a une forme de base essentiellement cylindrique et l'axe de réflexion (17) est incliné par rapport à la section du cylindre.

4. Dispositif selon l'une quelconque des revendications 1 à 3,
caractérisé en ce que
le réflecteur (1) présente, au niveau de la face opposée non tournée vers la surface de réflexion (17), au moins un perçage d'équilibrage de masse (24).

5. Dispositif selon la revendication 4,
caractérisé par
trois perçages d'équilibrage de masse (24).

6. Dispositif selon l'une quelconque des revendications 4 ou 5,
caractérisé en ce que
les perçages d'équilibrage de masse (24) s'étendent suivant la périphérie extérieure du réflecteur (1).

7. Dispositif selon l'une quelconque des revendications 3 à 6,
caractérisé en ce que
les perçages d'équilibrage de masse (24) sont voisins.

8. Dispositif selon l'une quelconque des revendications 1 à 7,
caractérisé en ce que
la lentille (9) est tenue dans une monture (23) coulissante à l'intérieur du manchon (5) en direction de l'axe optique (10) .

9. Dispositif selon l'une quelconque des revendications 1 à 8,
caractérisé en ce que
la surface de réflexion (17) du réflecteur (1) est inclinée par rapport à l'axe optique (10) dans une plage angulaire comprise entre 45° et 70°.

10. Dispositif selon l'une quelconque des revendications 1 à 9,
caractérisé en ce que
- la garniture transparente (13) présente une surface de passage de lumière (14) intérieure, plane, du côté du volume intérieur du manchon (5), et une surface de passage de lumière (15) extérieure, plane, du côté non situé vers le volume intérieur,
- les surfaces de passage de lumière (14, 15) sont alignées l'une par rapport à l'autre suivant une forme de coin, et
- la surface extérieure (15) est alignée parallèlement à l'axe optique (10) ou à une génératrice du manchon (5).

11. Dispositif selon la revendication 10,
caractérisé en ce que
l'angle d'inclinaison est choisi suivant l'angle de réflexion du faisceau lumineux (11).

12. Dispositif selon l'une quelconque des revendications 1 à 11,
caractérisé en ce que
les limites extérieures de la surface de la section de la garniture transparente (13) ont des flancs inclinés (16).

13. Dispositif selon l'une quelconque des revendications 1 à 12,
caractérisé en ce que
la surface de la section de la garniture transparente (13) est essentiellement de forme trapézoïdale dans les deux directions.

14. Dispositif selon l'une quelconque des revendications 1 à 13,
caractérisé en ce que
le réflecteur (1) est principalement en aluminium et la surface de réflexion (17) comporte un revêtement en or.

15. Dispositif selon l'une quelconque des revendications 1 à 14,
caractérisé en ce que
le réflecteur (1) est collé au support (2).

16. Dispositif selon l'une quelconque des revendications 1 à 15,
caractérisé en ce que
la garniture (23) ou la lentille (9) sont collées au manchon (5) dans la direction radiale.
